# EUROPÄISCHE PATENTSCHRIFT

(11) **EP 0 595 407 B1**
(45) Veröffentlichungstag und Bekanntmachung des Hinweises auf die Patenterteilung: **05.03.1997**
(21) Anmeldenummer: 93202940.8
(22) Anmeldetag: 20.10.1993
(51) Int. Cl.: G11B 33/02, G11B 25/06, G11B 31/00, B29C 45/14

(54) **Technisches Gerät, insbesondere elektromechanisches Laufwerk zum Bewegen von Informationsträgern**
Technical apparatus, particularly electromechanical drive for information carriers
Appareil technique, notamment dispositif d'entraînement électromécanique pour entraîner des supports d'information

(30) Priorität: 27.10.1992 DE 4236181
(43) Veröffentlichungstag der Anmeldung: 04.05.1994
(73) Patentinhaber: Philips Patentverwaltung GmbH, 22335 Hamburg (DE); Philips Electronics N.V., 5621 BA Eindhoven (NL)
(72) Erfinder: Kämmler, Georg, c/o Philips Patentverwaltung GMBH, D-20097 Hamburg (DE); Platzer, Herbert, NL-5613 CC Eindhoven (NL)
(74) Vertreter: von Laue, Hanns-Ulrich, Dipl.-Ing.

(56) Entgegenhaltungen:
- DE-A- 3 237 799
- DE-A- 3 911 746
- PATENT ABSTRACTS OF JAPAN vol. 007 no. 047 (M-196) ,24.Februar 1983 & JP-A-57 197139 (HITACHI SEISAKUSHO KK) 3.Dezember 1982,
- PATENT ABSTRACTS OF JAPAN vol. 009 no. 046 (M-360) ,27.Februar 1985 & JP-A-59 184613 (HITACHI SEISAKUSHO KK) 20.Oktober 1984,

## Beschreibung

Die Erfindung bezieht sich auf ein technisches Gerät, insbesondere elektromechanisches Laufwerk zum Bewegen von Informationsträgern mit wenigstens einem an einer Grundplatte gebildeten Kunststoffunktionsteil, das in Outsert-Moulding-Technik an die Grundplatte angespritzt ist, das aus wenigstens einem einen Durchbruch der Grundplatte durchgreifenden Steg und an den Grundplattenoberflächen befindlichen Haltestücken besteht, die der Steg verbindet und dessen Kunststoff nach dem Spritzgießen schrumpft.

Technische Geräte, bei denen tragende Metallplatten mit angespritzten Kunststoffteilen versehen sind, sind bekannt. Die Fertigungstechnik derartiger tragender Metallplatten ist unter dem Namen Outsert-Moulding-Technik bekannt. Die an der tragenden Metallplatte gebildeten Funktionsteile dienen den verschiedensten Zwecken, wie der Halterung, der Lagerung oder der Führung weiterer Funktionsteile. Die Verbindungstechnik zwischen den aufgespritzten Funktionsteilen und der tragenden Metallplatte besteht immer darin, daß ein Durchbruch in der Metallplatte derart umspritzt wird, daß beiderseits der Plattendurchbrüche gebildete Kunststoffhaltestücke mittels eines den Durchbruch durchgreifenden Steges miteinander verbunden sind. Infolge der unvermeidlichen Schrumpfung des Kunststoffes nach dem Spritzen zieht der sich verkürzende Steg die Haltestücke von beiden Plattenoberflächen an diese heran. Damit kommt ein verhältnismäßig fester Sitz zustande, der gerade noch ein Verdrehen in eine gewünschte Lage ermöglicht, der aber nicht mit einer Lagerausbildung vergleichbar ist, bei der sich die Teile während des Betriebes ständig bewegen, beispielsweise drehen oder verschieben.

Es ist aus der DE 39 11 746 C2 (PHD 89-053) bekannt, eine einem Dreh- oder Schiebelager gleichkommende Beweglichkeit durch eine Deformation der Aufspritzung nach dem Spritzprozeß herbeizuführen.

Aus der JP 57-197139 A ist es bekannt, zwischen den Formhohlraum für ein Haltestück der beschriebenen Art und die zugehörige Plattenoberfläche ein Abstandsstück zu fügen, welches beim Spritzvorgang sehr sorgfältig und sicher festgehalten werden muß. Nach dem Abspritzvorgang wird dieses Abstandsstück entfernt, womit das aufgespritzte Teil lagerfähig wird. Das Einfügen, Festhalten und spätere Entfernen des Abstandsstückes ist für eine Massenfertigung zu aufwendig.

Es ist auch bereits vorgeschlagen worden, durch eine Variation der Dicke der Haltestücke eine unterschiedliche Schrumpfkraft und damit eine mehr oder weniger bewegliche Verankerungen in den entsprechenden Lagerpunkten zu erreichen. Diese Verankerungen sind jedoch nicht leichtgängig genug, um damit Hebel- oder Laufradlager zu gestalten. Außerdem können die Haltestücke rund um den Durchbruch in der Metallplatte nicht beliebig dünn gemacht werden, da in diesen Fällen die Füllung des Durchbruchs mit dem Steg und der daran befestigten Haltestücke beim Spritzgießen nicht mehr gewährleistet ist. Auch die mechanische Festigkeit einer Anbindung von Funktionsteilen an sehr dünne Haltestücke ist nicht ausreichend groß.

Es ist Aufgabe der Erfindung, bei einem Laufwerk eines technischen Gerätes an einer Grundplatte in Outsert-Moulding-Technik gebildete Funktionsteile beim Spritzvorgang so zu gestalten, daß sie eine während des Betriebes benötigte Drehbeweglichkeit oder Verschiebemöglichkeit bieten bei Einsparung eines nachträglichen Bearbeitungsvorganges.

Die gestellte Aufgabe ist erfindungsgemäß dadurch gelöst, daß sich das Funktionsteil an der Grundplatte durch sein Schrumpfen selbsttätig frei beweglich macht durch folgende Gestaltung:
1. der Steg ist nur an einer Grundplattenoberfläche mit Haltestücken versehen;
2. der Durchmesser des Durchbruchs in der Grundplatte erweitert sich zur Oberfläche hin, die frei von Haltestücken ist;
3. der Steg ist mit einem Flansch versehen, der beim Einfließen von Kunststoff während des Spritzgießens die Durchmessererweiterung ausfüllt.

Bei einer derartigen Ausbildung des Funktionsteiles im Rahmen des Abspritzvorganges hat dieses nach dem Schrumpfen noch eine derartige Beweglichkeit, daß es während des Gerätebetriebes nach Belieben frei beweglich oder verschieblich ist. Das Lösen des Funktionsteils von der Grundplatte zum Erreichen der Freibeweglichkeit ist einfach eine Folge des Schrumpfvorganges.

Nach einer weiteren Ausgestaltung der Erfindung ist vorgesehen, daß die Durchbruchserweiterung im wesentlichen konisch ist. Eine konische Erweiterung erbringt nach dem Schrumpfen ein vorausberechenbares Abheben des Stegflansches von der Durchbruchswand der Grundplatte.

Nach einer weiteren Ausgestaltung der Erfindung ist vorgesehen, daß der Winkel α der Konizität zwischen der Grundplattenoberfläche und der konischen Durchmessererweiterung ca. 40° bis 50°, vorzugsweise 45°, beträgt. Eine Konizität von 40° bis 50°, bevorzugt 45°, hat sich als besonders geeignet erwiesen, die geforderte Freibeweglichkeit zu erreichen. Selbstverständlich sind auch andere Winkelgradausbildungen möglich, wobei eine Veränderung des Winkel in Richtung auf 0° die freie Drehbeweglichkeit vermindert und eine Veränderung des Winkels mehr in Richtung auf 90° die Führungsfähigkeit in dem Durchbruch verringert.

Nach einer weiteren Ausgestaltung der Erfindung ist vorgesehen, daß das Funktionsteil ein Drehlagerteil oder ein Schieber ist, die an der Grundplatte frei beweglich gelagert sind. Für beide Arten von beweglichen Funktionsteilen eignet sich die Ausbildung nach der Erfindung gleich gut.

Die Erfindung wird anhand der Zeichnung näher erläutert. Es zeigen:
Fig. 1 ein technisches Gerät, insbesondere ein Autoradio mit einem Laufwerk für bandförmige Informationsträger, geöffnet und in schaubildlicher Darstellung,
Fig. 2 im Schnitt eine Grundplatte mit einem in Outsert-Moulding-Technik angespritzten Funktionsteil, das nach dem Anspritzen an die Grundplatte an dieser dreh- oder schiebebeweglich ist.

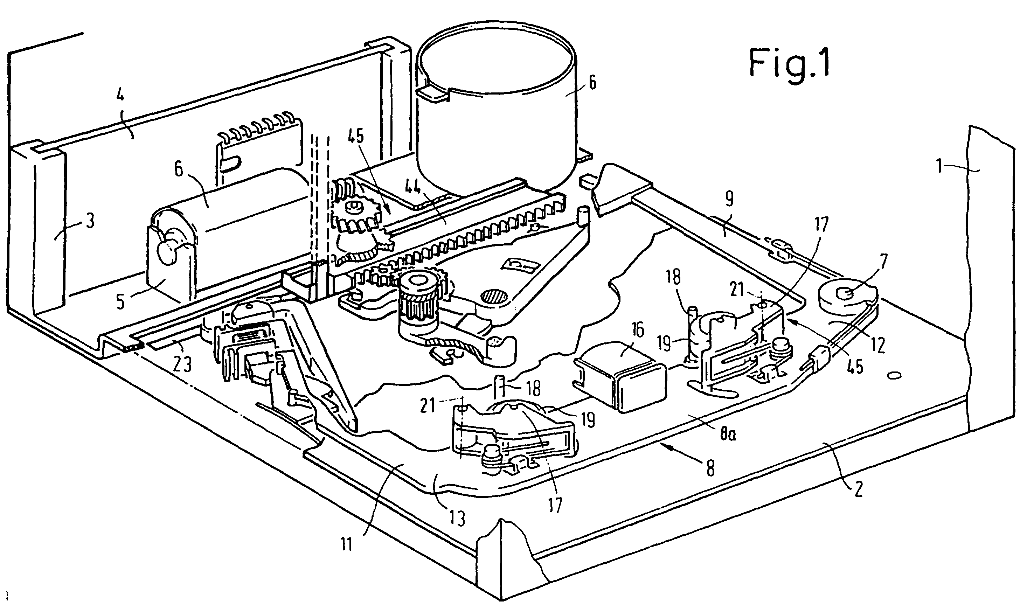

Fig. 1 zeigt aus einem Gerät 1, beispielsweise einem Autoradio, die Grundplatte 2 eines Magnetbandkassettenlaufwerkes, an die in Outsert-Moulding-Technik ortsfeste Kunststoffunktionsteile angespritzt sind. Solche ortsfesten Funktionsteile 3 können beispielsweise eine Schaltungsplatte 4 oder Stützen 5 zum Lagern eines Motors 6 sein. Als Kunststoff kommt dabei vorzugsweise teilkristalliner thermoplastischer Kunststoff in Betracht, dessen Schrumpfung ohne Füllstoff in der Größenordnung von 1% bis 3% liegt. Durch eine Beimischung von Füllstoffen läßt sich die Schwindung weiter reduzieren. Dies hat den Vorteil, daß sich zum einen die Stegbreite vergrößern läßt und zum anderen das Kippen reduziert wird.Um eine Lagerachse 7 ist an der Grundplatte 2 eine Kopfplatte 8 verschwenkbar, an der Schenkel 9 und 11 in Eckbereichen 12 und 13 angreifen. Das Basisteil 8a der Kopfplatte trägt einen Magnetkopf 16 mit über Halterungen 17 mit Tonwellen 18 zusammenwirkender Andruckrollen 19.

Die als Funktionsteile 17 wirkenden Halterungen der Andruckrollen 19 sind um Achsen 21 verschwenkbar. In der Grundplatte 2 ist ein Längsschlitz 23 vorgesehen, in dem ein ebenfalls als Funktionsteil wirkender Schieber 44 beweglich ist.

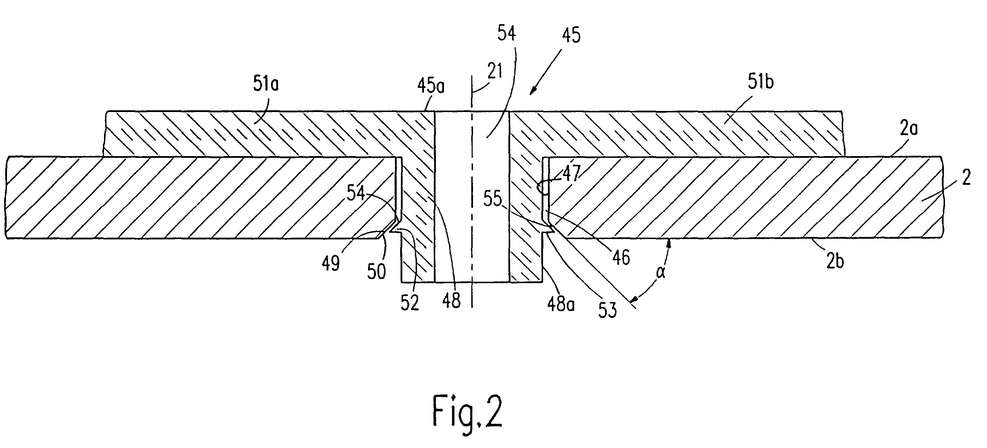

Fig. 2 zeigt im Schnitt ein Lager 45 der Halterung 17 mit der Achse 21. Den ortsfesten Bestandteil des Lagers 45 bildet die metallische Grundplatte 2 mit einem an ihr vorgesehen Durchbruch 46. Den beweglichen Bestandteil bildet ein in Spritzgießtechnik gebildetes Kunststoffunktionsteil 45a. Der Durchbruch 46 ist bei dem Lager 45 kreisrund oder schlitzartig ausgebildet und hat eine Innenwand 47, die den Steg 48 aufnimmt.

Die Innenwand 47 des Durchbruchs 46 verläuft von der einen Plattenoberfläche 2a zur anderen Plattenoberfläche 2b durch die Platte 2 hindurch. Wie aus Fig. 2 zu ersehen ist, weist die Innenwand 47 von der Plattenoberfläche 2a zur Plattenoberfläche 2b hin im Bereich der Plattenoberfläche 2b eine konische Durchmessererweiterung 49 auf. Der Winkel α zwischen der Fläche 50 der Durchmessererweiterung 49 und der Plattenoberfläche 2b beträgt etwa 45°.

Das bewegliche Funktionsteil 45a des Lagers 45 wird von dem Steg 48, Haltestücken 51a und 51b sowie einem Kragen 52 am Steg gebildet. Das bewegliche Funktionsteil 45a wird in einem Spritzgießvorgang an die Platte 2 angespritzt. Dabei bilden sich unmittelbar an der Plattenoberfläche 2a die Haltestücke 51a und 51b, die voneinander getrennt, aber auch einstückig gebildet sein können. Der Kragen 52 entsteht beim Spritzen dadurch, daß das Spritzwerkzeug eng an der zu spritzenden Außenwand 48a des Steges anliegt und der Keilraum 53 mit Kunststoff ausgefüllt wird, der dann den Kragen 52 bildet. Der Steg 48 wird vorzugsweise unter Ausbildung eines zentralen Mittelloches 54 gespritzt.

Wenn der Kunststoff nach dem Spritzen schrumpft, dann schrumpft der Steg 48 sowohl in radialer Richtung als auch in axialer Richtung. Dadurch wandert der Flansch 52 sowohl radial nach innen als auch axial in Richtung auf die Haltestücke 51 und 51b. Aus der Kombination der Radialschrumpfung und der Axialschrumpfung bildet sich zwischen der Flanschwand 54 und der Wand 50 der Erweiterung ein Spalt 55, der die Drehbeweglichkeit des Funktionsteiles 45a mit sich bringt.

Ist die Innenwand 47 des Durchbruches 46 kreisrund ausgebildet, dann wird der gespritzte Steg 48 auch rund, und das Funktionsteil 45a ist nach dem Spritzen ein freibewegliches Drehteil. Ist der Durchbruch 46 schlitzförmig, wie es anhand der Fig. 1 bei dem Schlitz 23 gezeigt ist, dann wird der Steg 48 leistenförmig sein, und das Funktionsteil 45a ist dann ein Schieber.

## Patentansprüche

1. Technisches Gerät, insbesondere elektromechanisches Laufwerk zum Bewegen von Informationsträgern, mit wenigstens einem an einer Grundplatte (2) gebildeten Kunststoffunktionsteil (45a), das in Outsert-Moulding-Technik an die Grundplatte (2) angespritzt ist, das aus wenigstens einem einen Durchbruch (46) der Grundplatte (2) durchgreifenden Stegteil (48) und an den Oberflächen (2a) der Grundplatte (2) befindlichen Haltestücken (51a, 51b) besteht, die der Steg (48) verbindet und dessen Kunststoff nach dem Spritzgießen schrumpft, wobei das Funktionsteil (45a) als Drehteil oder Schieber frei beweglich ist, dadurch gekennzeichnet, daß sich das Funktionsteil (45a) an der Grundplatte (2) durch sein Schrumpfen als Drehteil oder Schieber selbsttätig frei beweglich macht durch folgende Gestaltung:
1. der Steg (48) ist nur an einer Grundplattenoberfläche (2a) mit Haltestücken (51a, 51b) versehen;
2. der Durchmesser des Durchbruchs (46) in der Grundplatte (2) erweitert sich zur Oberfläche (2b) hin, die frei von Haltestücken ist;
3. der Steg (48) ist mit einem Flansch (52) versehen, der beim Einfließen von Kunststoff während des Spritzgießens die Durchmessererweiterung (49) ausfüllt.

2. Technisches Gerät nach Anspruch 1, dadurch gekennzeichnet, daß die Durchbruchserweiterung (49) im wesentlichen konisch ist.

3. Technisches Gerät nach Anspruch 1 oder 2, dadurch gekennzeichnet, daß der Winkel α der Konizität zwischen der Grundplattenoberfläche (2b) und der konischen Durchmessererweiterung (49) ca. 40° bis 50°, vorzugsweise 45°, beträgt.

4. Technisches Gerät nach einem der Ansprüche 1 bis 3, dadurch gekennzeichnet, daß das Funktionsteil (45a) ein Drehlagerteil (45) oder ein Schieber (44) ist, die an der Grundplatte (2) freibeweglich gelagert sind.

## Claims

1. A technical device, particularly an electromechanical deck for moving information carriers, the device comprising at least one plastics function part (45a) formed on a deck plate (2), which part has been moulded onto the deck plate (2) by outsert-moulding and comprises at least one bridge element (48), which traverses a hole (46) in the deck plate (2), and retaining elements (51a, 51b), which are situated on the surfaces (2a) of the deck plate (2) and are interconnected by the bridge element (48), the plastics of said part being subject to shrinkage after injection-moulding, the function part (45a) being freely movable as a rotatable part or a slidable part, characterized in that the mobility of the function part (45a) relative to the deck plate (2) as a rotatable or slidable part is obtained automatically through its shrinkage by the following construction:
1. the bridge element (48) has been provided with retaining elements (51a, 51b) on only one of the deck plate surfaces (2a);
2. the diameter of the hole (46) in the deck plate (2) widens towards the surface (2b) which is free of retaining elements;
3. the bridge element (48) has a flange (52) which fills the portion (49) of widened diameter when the plastics is injected during injection-moulding.

2. A technical device as claimed in Claim 1, characterized in that the widened portion (49) of the hole is substantially conical.

3. A technical device as claimed in Claim 1 or 2, characterized in that the angle α of taper between the deck plate surface (2b) and the conically widened portion (49) is approximately 40° to 50°, and preferably 45°.

4. A technical device as claimed in any one of the Claims 1 to 3, characterized in that the function part (45a) is a rotary bearing part (45) or a sliding part (44), which parts are supported on the deck plate (2) so as to be freely movable.

## Revendications

1. Appareil technique, notamment un mécanisme d'entraînement électromécanique pour entraîner des supports d'information, avec au moins une pièce fonctionnelle en matière plastique (45a) formée sur une plaque de fond (2), qui est moulée par injection sur la plaque de fond (2) suivant la technique de moulage Outsert, qui est constituée au moins d'une portée (48) qui traverse une ouverture (46) de la plaque de fond (2) et de joues de retenue (51a, 51b) qui se trouvent sur les surfaces (2a) de la plaque de fond (2), que la portée (48) relie et dont la matière plastique se contracte après le moulage par injection, la pièce fonctionnelle (45a) étant librement mobile comme une pièce tournante ou un coulisseau, caractérisé en ce que la pièce fonctionnelle (45a) devient spontanément librement mobile sur la plaque de fond (2), sous l'effet de son retrait, en tant que pièce tournante ou coulisseau grâce à la configuration suivante :
1) la portée (48) n'est pourvue de joues de retenue (51a, 51b) que sur une surface (2a) de la plaque de fond;
2) le diamètre de l'ouverture (46) dans la plaque de fond (2) augmente en direction de la surface (2b) qui est exempte de joues de retenue;
3) la portée (48) est pourvue d'une collerette (52), qui remplit l'augmentation de diamètre (49) pendant l'écoulement de la matière plastique lors du moulage par injection.

2. Appareil technique suivant la revendication 1, caractérisé en ce que l'augmentation de diamètre (49) est essentiellement conique.

3. Appareil technique suivant la revendication 1 ou 2, caractérisé en ce que l'angle α de conicité entre la surface (2b) de la plaque de fond et l'augmentation de diamètre conique (49) vaut entre 40° et 50° environ, de préférence 45°.

4. Appareil technique suivant l'une quelconque des revendications 1 à 3, caractérisé en ce que la pièce fonctionnelle (45a) est un palier tournant (45) ou un coulisseau (44), qui sont montés librement mobiles sur la plaque de fond (2).
